# EUROPÄISCHE PATENTSCHRIFT

(11) **EP 2 619 242 B1**
(45) Veröffentlichungstag und Bekanntmachung des Hinweises auf die Patenterteilung: **02.12.2020**
(21) Anmeldenummer: 11725373.2
(22) Anmeldetag: 30.05.2011
(51) Int. Cl.: C08G 18/42, C08G 18/79, C08J 5/24

(54) **VERFAHREN ZUR HERSTELLUNG VON LAGERSTABILEN POLYURETHAN-PREPREGS UND DARAUS HERGESTELLTE FORMKÖRPER AUS POLYURETHANZUSAMMENSETZUNG IN LÖSUNG**
METHOD FOR PRODUCING STORAGE-STABLE POLYURETHANE PREPREGS AND MOLDING BODIES PRODUCED THEREFROM ON THE BASIS OF A POLYURETHANE COMPOSITION IN SOLUTION
PROCÉDÉ DE FABRICATION DE PRÉIMPRÉGNÉS DE POLYURÉTHANNE STABLES AU STOCKAGE ET CORPS MOULÉS FORMÉS DE CES PRÉIMPRÉGNÉS À BASE D'UNE COMPOSITION DE POLYURÉTHANNE EN SOLUTION

(30) Priorität: 23.09.2010 DE 102010041247
(43) Veröffentlichungstag der Anmeldung: 31.07.2013
(73) Patentinhaber: Evonik Operations GmbH, 45128 Essen (DE)
(72) Erfinder: SCHMIDT, Friedrich, Georg, 45721 Haltern am See (DE); LOMOELDER, Rainer, 48153 Münster (DE); ORTELT, Martina, 48249 Dülmen (DE); KOHLSTRUK, Britta, 48249 Dülmen (DE); SPYROU, Emmanouil, 46514 Schermbeck (DE); LOESCH, Holger, 44627 Herne (DE); FUCHSMANN, Dirk, 45721 Haltern am See (DE)
(74) Vertreter: Evonik Patent Association
(86) Internationale Anmeldenummer: PCT/EP2011/058805
(87) Internationale Veröffentlichungsnummer: WO 2012/038105

(56) Entgegenhaltungen:
- EP-A2- 0 578 974
- DE-A1- 2 407 923
- DE-A1- 2 430 426
- DE-A1- 3 148 358
- DE-T2- 69 313 544
- GB-A- 2 093 035
- JP-A- 11 060 677
- JP-A- 2010 006 900

## Beschreibung

Die Erfindung betrifft ein Verfahren zur Herstellung von lagerstabilen Polyurethan-Prepregs und daraus hergestellte Formkörper (Composite-Bauteile), erhältlich durch ein Verfahren mittels einer Polyurethanzusammensetzung in Lösung durch Impregnierung von Faser verstärkten Materialien wie Geweben und Gelegen unter Verwendung von reaktiven Polyurethanzusammensetzungen.

Verschiedene Formgebungsprozesse, wie z. B. das Reaction-Transfer-Moulding-(RTM)-Verfahren beinhalten die Einbringung der Verstärkungsfasern in eine Form, das Schließen der Form, das Einbringen der vernetzbaren Harzformulierung in die Form und die anschließende Vernetzung des Harzes, typischerweise durch Wärmezufuhr.

Eine der Beschränkungen eines solchen Prozesses ist das relativ schwierige Einlegen der Verstärkungsfasern in die Form. Die einzelnen Lagen des Gewebes oder Geleges müssen zugeschnitten und den unterschiedlichen Formgeometrien angepasst werden. Das kann sowohl zeitintensiv wie auch kompliziert sein, insbesondere wenn die Formkörper auch Schaum- oder andere Kerne enthalten sollen. Vorformbare Faserverstärkungen mit einfachem Handling und bestehenden Umformmöglichkeiten wären hier wünschenswert.

Faserverstärkte Materialien in Form von Prepregs werden bereits in vielen industriellen Anwendungen wegen ihrer bequemen Handhabung und der erhöhten Effizienz bei der Verarbeitung im Vergleich zu der alternativen wet-lay-up Technologie eingesetzt.

Industrielle Anwender solcher Systeme verlangen neben schnelleren Zykluszeiten und höheren Lagerstabilitäten auch bei Raumtemperatur auch eine Möglichkeit die Prepregs zuzuschneiden, ohne dass bei automatisiertem Zuschnitt und Lay-up der einzelnen Prepreg-Lagen die Schneidwerkzeuge mit der häufig klebrigen Matrixmaterial verunreinigt werden.

Neben Polyestern, Vinylestern und Epoxy-Systemen gibt es eine Reihe spezialisierter Harze im Bereich der vernetzenden Matrix-Systeme. Dazu zählen auch Polyurethan-Harze, die wegen ihrer Zähigkeit, Schadenstoleranz und die Festigkeit insbesondere zur Herstellung von Composite-Profilen über Pultrusionsverfahren eingesetzt werden. Als Nachteil wird häufig die Toxizität der verwendeten Isocyanate genannt.

Polyurethan-Composites weisen auch gegenüber Vinylestern, ungesättigten Polyesterharzen (UPE) oder UPE-Urethan-Hybrid-Harzen eine überlegene Zähigkeit auf.

Prepregs und daraus hergestellte Composites auf der Basis von Epoxy-Systemen werden zum Beispiel beschrieben in WO 98/50211, US 4,992,228, US 5,080,857, US 5,427,725, GB 2007676, GB 2182074, EP 309 221, EP 297 674, WO 89/04335, US 5,532,296 und US 4,377,657, US 4,757,120.

In WO 2006/043019 wird ein Verfahren zur Herstellung von Prepregs auf der Basis von Epoxidharz-Polyurethanpulvern beschrieben.

Des Weiteren sind Prepregs auf der Basis von pulverförmigen Thermoplasten als Matrix bekannt.

In US 2004/0231598 wird eine Methode beschrieben, bei der die Partikel über eine spezielle Beschleunigungskammer mit elektrostatischer Aufladung geführt werden. Diese Apparatur dient zur Beschichtung von Glas-, Aramid- oder Kohlefaser-Substraten für die Herstellung von Prepregs aus thermoplastischen Harzen. Als Harze werden Polyethylen (PE), Polypropylen (PP), Polyetheretherketon (PEEK), Polyethersulfon (PES), Polyphenylsulfon (PPS), Polyimid (PI), Polyamid (PA), Polycarbonat (PC), Polyethylenterephthalat (PET), Polyurethan (PU), Polyester und Fluorpolymere genannt. Die daraus hergestellten thermoplastischen Prepreg-Textilien zeigen inherente Zähigkeit, ein gutes viscoelastische Dämpfungsverhalten, eine unbegrenzte Lagerfähigkeit, gute Chemikalienbeständigkeit und Recyclierbarkeit.

In der WO 98/31535 wird eine Methode zur Pulverimprägnierung beschrieben, bei der die zu imprägnierenden Glas- oder Kohlefaserstränge mit einer Partikel/Flüssigkeits- bzw. Partikel/Gas-Mischung in einem definierten Geschwindigkeitsprofil beaufschlagt werden. Dabei bestehen die Pulver aus keramischen bzw. thermoplastischen Materialien, unter anderem thermoplastisches Polyurethan.

In WO 99/64216 werden Prepregs und Composite und eine Methode zu deren Herstellung beschrieben, bei der Emulsionen mit so kleinen Polymerpartikeln verwendet werden, dass eine Einzelfaserumhüllung ermöglicht wird. Die Polymere der Partikel haben eine Viskosität von mindestens 5000 centipoise und sind entweder Thermoplaste oder vernetzende Polyurethan-Polymere.

In der EP 0590702 werden Pulverimprägnierungen zur Herstellung von Prepregs beschrieben, bei denen das Pulver aus einem Gemisch aus einem Themoplasten und einem reaktiven Monomer bzw. Prepolymeren besteht. Die WO 2005/091715 beschreibt ebenfalls die Verwendung von Thermoplasten zur Herstellung von Prepregs.

Michaeli et al. beschreibt die Entwicklung einer Pulvertechnologie für einen Pultrusionsprozess mit Thermoplastischen Polyurethanen, TPU genannt, in Coatings & Composite Materials , Nr.19, p37 - 39, 1997. Weiterhin werden in dem Artikel Processing and properties of thermoplastic polyurethane prepreg. (Ma, C. C. M.; Chiang, C. L. Annual Technical Conference - Society of Plastics Engineers (1991), 49th 2065-9.) Thermoplastische Polyurethan (TPU) Prepregs auf Basis von Lösemitteln und Wasser enthaltenden TPU-Systemen offenbart.

Prepregs mit einer Matrix auf der Basis von 2-Komponenten-Polyurethanen (2-K-PUR) sind bekannt.

Die Kategorie der 2-K-PUR umfasst im Wesentlichen die klassischen reaktiven PolyurethanHarz-Systeme. Prinzipiell handelt es sich um ein System aus zwei getrennten Komponenten. Während der maßgebende Bestandteil der einen Komponente immer ein Polyisocyanat ist, sind dies bei der zweiten Polyole bzw. bei neueren Entwicklungen auch Amino- oder Amin-Polyol-Gemische. Beide Teile werden erst kurz vor der Verarbeitung miteinander vermischt. Danach erfolgt die chemische Aushärtung durch Polyadition unter Bildung eines Netzwerkes aus Polyurethan bzw. Polyharnstoff. 2-Komponenten-Systeme haben nach dem Vermischen beider Bestandteile eine begrenzte Verarbeitungszeit (Standzeit, Potlife), da die einsetzende Reaktion zur allmählichen Viskositätserhöhung und schließlich zur Gelierung des Systems führt. Zahlreiche Einflussgrößen bestimmen dabei die effektive Zeit seiner Verarbeitbarkeit: Reaktivität der Reaktionspartner, Katalysierung, Konzentration, Löslichkeit, Feuchtegehalt, NCO/OH-Verhältnis und Umgebungstemperatur sind die wichtigsten [Lackharze, Stoye/Freitag, Hauser-Verlag 1996, Seiten 210/212]. Der Nachteil der Prepregs auf der Basis derartiger 2-K-PUR-Systeme ist, dass nur eine kurze Zeit zur Verarbeitung des Prepreg zu einem Composite zur Verfügung steht. Deshalb sind derartige Prepregs nicht über mehrere Stunden geschweige denn Tage lagerstabil.

Im Folgenden folgt eine Beschreibung der Polyurethan-Prepregs bzw. -Composite auf der Basis von 2-K-PUR-Systemen. In dem Artikel von K.Recker wird über die Entwicklung eines 2-KPolyurethansystems für das Harzmattenverfahren unter besonderer Berücksichtigung der Verarbeitungseigenschaften für SMC-Bauteile berichtet. (Baypreg - ein neuer POLYURETHAN-Werkstoff für das Harzmattenverfahren , Recker, Klaus, Kunststoffe-Plastics 8,1981).

Die WO 2005/049301 offenbart ein katalytisch aktiviertes 2-K-PUR-System, wobei die Polyisocyanat-Komponente und das Polyol gemischt werden und mittels Pultrusion zu einem Composite verarbeitet werden.

In der WO 2005/106155 werden faserverstärkte Composites für die Bau-Industrie offenbart, die mittels der Long-Fiber-Injection (LFI) Technologie mit 2-KPolyurethan-Systemen hergestellt werden.

In der JP 2004196851 werden Composites beschrieben, die aus Carbonfasern und organischen Fasern, wie z. B. Hanf, unter Verwendung einer Matrix aus 2-K-PUR auf der Basis von polymeren Methylendiphenyldiisocyanat (MDI) und speziellen OH-Gruppen haltigen Verbindungen hergestellt werden.

Die EP 1 319 503 beschreibt Polyurethan-Composites, wobei spezielle Polyurethan-Deckschichten für ein mit einem 2K-PUR-Harz getränktes Faser-Laminat, das eine Kernschicht (z. B. eine Papierwabe) umhüllt, verwendet werden. Das 2K-PUR-Harz besteht z. B. aus MDI und einer Mischung aus Polypropylentriolen und Diolen von Ethylenoxid-Propylenoxid-Copolymeren.

In der WO 2003/101719 werden Polyurethanbasierte Composites und die Methoden zur Herstellung beschrieben. Es handelt sich um 2-K-Polyurethanharze mit definierten Viskositäten und bestimmten Gelzeiten.

2-K-PUR-Systeme werden ebenfalls abgehandelt in: "Fiber reinforced polyurethane composites: shock tolerant components with particular emphasis on armor plating" (Ratcliffe, Colin P.; Crane, Roger M.; Santiago, Armando L., AMD (1995), 211 (Innovative Processing and Characterization of Composite Materials), 29-37.) und in Fiber-reinforced polyurethane composites. I. Process feasibility and morphology. (Ma, Chen Chi M.; Chen, Chin Hsing. International SAMPE Symposium and Exhibition (1992), 37 (Mater. Work. You 21st Century), 1062-74.)

Von der unterschiedlichen Bindemittelbasis abgesehen entsprechen feuchtigkeitshärtende Lacke sowohl in ihrer Zusammensetzung als auch in ihren Eigenschaften weitgehend analogen 2K-Systemen. Es werden im Prinzip die gleichen Lösemittel, Pigmente, Füllstoffe und Hilfsmittel verwendet. Anders als 2K-Lacke tolerieren diese Systeme vor ihrer Applikation aus Stabilitätsgründen keinerlei Feuchtigkeit.

Bekannt sind auch physikalisch trocknende Systeme auf der Basis von nichtreaktiven PUR-Elastomeren. Es handelt sich hierbei um höhermolekulare, lineare, thermoplastische Urethane aus Diolen und Diisocyanaten, vorzugsweise MDI, TDI, HDI und IPDI. Solche thermoplastischen Systeme weisen in der Regel sehr hohe Viskositäten und damit auch sehr hohe Verarbeitungstemperaturen auf. Dies erschwert den Einsatz für Prepregs maßgeblich. Bei der Herstellung von Prepregs mit Faserverbunden ist der Einsatz von Pulvern bei reaktiven Systemen eher unüblich und beschränkt sich bislang auf wenige Einsatzgebiete. Das wohl gängigste Verfahren, um ein Pulver auf eine Faseroberfläche zu bringen, ist das Wirbelbettverfahren (fluidized bed impregnation). Durch eine aufwärts gerichtete Strömung werden Pulverpartikel in einen Zustand versetzt, in dem sie fluid-ähnliche Eigenschaften aufweisen. Dieses Verfahren wird in der EP 590 702 angewandt. Dabei werden die Stränge einzelner Faserbündel auseinander geflochten und im Wirbelbett mit dem Pulver beschichtet. Das Pulver besteht dabei aus einer Mischung aus reaktivem und thermoplastischem Pulver, um so die Eigenschaften der Matrix zu optimieren. Einzelne Rovings (Faserbündel) werden schließlich zusammengelegt und mehrere Lagen bei einem Druck von 16 bar für etwa 20 Minuten verpresst. Die Temperaturen variieren zwischen 250 und 350 °C. Häufig kommt es allerdings beim Wirbelbettverfahren zu unregelmäßiger Beschichtung, insbesondere wenn die Stränge nicht auseinander gezogen werden.

Diesbezüglich wird in der US 20040231598 eine Methode vorgestellt, die ähnlich dem Wirbelbettverfahren funktioniert. Dabei transportiert ein Luftstrom die Partikel zum Substrat und es erfolgt durch einen speziellen Aufbau eine gleichmäßige Abscheidung des Pulvers.

Ein weiteres Verfahren beschreibt die, US 20050215148. Dort werden mit der eben erwähnten Vorrichtung gleichmäßige Verteilungen des Pulvers auf der Faser erreicht. Die Partikelgröße reicht dabei von 1 bis 2000 µm. Beschichtet wird bei mehreren Versuchen von einer oder von zwei Seiten. Durch die gleichmäßige Aufbringung des Pulvers werden nach einem anschließenden Verpressen der Prepregs Laminate ohne Lufteinschlüsse erzeugt.

Eine weitere Anmeldung, WO 2006/043019 beschreibt die Anwendung von epoxy- und amino-terminierten Harzen in Pulverform. Dabei werden die Pulver vermischt und auf die Fasern gegeben. Anschließend werden die Partikel angesintert. Die Partikelgröße liegt zwischen 1 und 3000 µm, vorzugsweise aber zwischen 1 und150 µm.

Diese Einschränkung der Partikelgröße auf eher kleine Durchmesser wird auch in einer Studie der Michigan State University empfohlen. Dabei ist die Theorie, dass Partikel mit kleinen Durchmessern eher in Hohlräume zwischen einzelnen Filamenten eindringen können als Partikel mit großen Durchmessern (S. Padaki, L.T. Drzal: a simulation study on the effects of particle size on the consolidation of polymer powder impregnated tapes, Department of Chemical Engineering, Michigan State University, Composites: Part A (1999), pp. 325-337).

Neben der Prepregtechnik werden auch in anderen klassischen Verfahren reaktive Pulver-Systeme eingesetzt, so beispielsweise in der Wickeltechnik [M.N. Ghasemi Nejhad, K.M. Ikeda: Design, manufacture and characterization of composites using on-line recycled thermoplastic powder impregnation of fibres and in-situ filament winding, Department of Mechanical Engineering, University of Hawaii at Manoa, Journal of Thermoplastic Composite Materials, Vol 11, pp. 533-572, November 1998] oder beim Pultrusionsverfahren. Für das Pultrusionsverfahren werden beispielsweise Faserseile (Towpregs) mit dem Pulver beschichtet und zunächst als sogenannte Towpregs aufgewickelt und gelagert. Eine Möglichkeit zur Herstellung ist in einem Artikel des SAMPE Journal's beschrieben [R.E. Allred, S. P. Wesson, D. A. Babow: powder impregnation studies for high temperature towpregs, Adherent Technologies, SAMPE Journal, Vol. 40, No. 6, pp. 40-48, November/ December 2004]. In einer weiteren Untersuchung wurden solche Towpregs durch das Pultrusionsverfahren zusammen gepresst und ausgehärtet zu Werkstoffbauteilen [N.C. Parasnis, K. Ramani, H.M. Borgaonkar: Ribbonizing of electrostatic powder spray impregnated thermoplastic tows by pultrusion, School of Mechanical Engineering, Purdue University, composites, Part A, Applied science and manufacturing, Vol. 27, pp. 567-574, 1996]. Obwohl die Herstellung von Towpregs und anschließende Verpressung im Pultrusionsverfahren bereits mit duroplastischen Systemen durchgeführt wurde, werden bei diesem Verfahren bislang größtenteils nur thermoplastische Systeme eingesetzt.

In DE 102009001793.3 und DE 102009001806.9 wird ein Verfahren zur Herstellung von lagerstabilen Prepregs, im Wesentlichen aufgebaut aus A) mindestens einem Faser förmigen Träger und B) mindestens einer reaktiven pulverförmigen Polyurethanzusammensetzung als Matrixmaterial beschrieben.

Die Aufgabe war es, ein einfacheres Verfahren zur Herstellung von problemlos zu handhabenden, das heißt nicht toxischen, polyurethanbasierenden Prepreg-Systemen auf der Basis von Polyurethanzusammensetzungen zu finden. Weitere Aufgabe dieser Erfindung war es, Prepregs mit Polyurethan-Matrixmaterial zu finden, welche mit einem einfachen Verfahren hergestellt werden können, wobei das Hauptaugenmerk auf das Handling und die Lagerungsfähigkeit der Prepregs gelegt werden sollte.

Für die Herstellung der Prepregs wäre es vorteilhaft, wenn die Viskosität von Zubereitungen der unvernetzten Matrixmaterialien gering genug ist, um bei der Herstellung des Composite-Bauteils eine Benetzung des Faser förmigen Trägers mit ausreichendem Faservolumenanteil zu gewährleisten, wobei auch eine Thixotropie vorteilhaft sein kann, damit ein Abfließen des Harzes in senkrechten Bauteilsegmenten verhindert werden kann.

Durch die Wahl geeigneter Ausgangsstoffe zu Herstellung der Matrixmaterialien sollte eine genügend lange Verarbeitungszeit (abhängig von der jeweiligen Anwendung bei der Herstellung der Composite) zwischen dem Aufschmelzen der nicht ausreagierten Matrixmaterial und der Vollendung der Reaktion gewährleistet werden.

Überraschend wurde nun gefunden, dass ausreichend imprägnierte, reaktive und lagerstabile Prepregs hergestellt werden können, indem zunächst die einzelnen Komponenten in einem geeigneten gemeinsamen Lösemittel (C) gelöst werden, der Faser förmige Träger mit dieser Lösung getränkt / imprägniert wird und anschließend bei niedriger Temperatur (< 100 °C) das Lösemittel vollständig (durch z. B. themische Behandlung oder Vakuumapplizierung) entfernt wird. Man erhält so Prepregs mit zumindest gleichen aber auch verbesserten wie in DE 102009001793 bzw. DE 102009001806 beschriebenen Verarbeitungseigenschaften, die für die Herstellung leistungsfähiger Composite für verschiedenste Anwendungen im Bereich der Bau-, der Automobil-, der Luft- und Raumfahrt-Industrie, der Energietechnik (Windkraftanlagen) und im Boots- und Schiffbau eingesetzt werden können. Die erfindungsgemäß verwendbaren reaktiven Polyurethanzusammensetzungen sind umweltfreundlich, kostengünstig, weisen gute mechanische Eigenschaften auf, lassen sich einfach verarbeiten und zeichnen sich nach Härtung durch eine gute Wetterbeständigkeit wie durch ein ausgewogenes Verhältnis zwischen Härte und Flexibilität aus.

Gegenstand der Erfindung ist ein Verfahren zur Herstellung von Prepregs im Wesentlichen aufgebaut aus
A) mindestens einem Faser förmigen Träger
   und
B) mindestens einer reaktiven Polyurethanzusammensetzung als Matrixmaterial, wobei die Polyurethanzusammensetzungen im Wesentlichen Mischungen aus einem gegenüber Isocyanaten reaktive funktionelle Gruppen aufweisenden Polymeren b) als Binder und intern blockiertem Di- oder Polyisocyanat als Härter a) enthalten, in mindestens einem Lösemittel (C),
   I. durch Herstellung der reaktiven Polyurethanzusammensetzung B) in mindestens einem Lösemittel (C), und
   II. direkte Imprägnierung des Faser förmigen Träger A) mit der Lösung aus B),
   III. Entfernen des Lösemittels.

Das Prinzip des Verfahrens zur Herstellung von Prepregs besteht darin, dass zunächst eine Lösung der reaktiven Polyurethanzusammensetzung B) aus deren einzelnen Komponenten in einem geeigneten gemeinsamen Lösemittel (C) hergestellt wird. Diese Lösung der reaktiven Polyurethanzusammensetzung B) wird dann direkt auf den Faser förmigen Träger A) aufgebracht, wobei der Faser förmige Träger mit dieser Lösung getränkt / imprägniert wird. Anschließend wird das Lösemittel entfernt. Bevorzugt wird das Lösemittel vollständig bei niedriger Temperatur, bevorzugt < 100 °C, durch z.B. thermische Behandlung oder Vakuumapplizierung entfernt. Danach können die wieder vom Lösemittel befreiten lagerfähigen Prepregs zu einem späteren Zeitpunkt zu Composites weiterverarbeitet werden. Durch dass erfindungsgemäße Verfahren erfolgt eine sehr gute Imprägnierung des Faser förmigen Trägers, dadurch bedingt, dass die Lösungen der reaktiven Polyurethanzusammensetzungen die Faser des Trägers sehr gut benetzen, wobei die zu einer beginnenden Vernetzungsreaktion führen könnende thermische Belastung der Polyurethanzusammensetzung durch eine vorherige Schmelzehomogenisierung vermieden wird, des weiteren fallen die Prozessschritte der Vermahlung und Siebung in einzelne Partikelgrößenfraktionen weg, sodass eine höhere Ausbeute an imprägniertem Faser förmigen Träger erzielt wird.

Die Herstellung der Lösung der Polyurethanzusammensetzung B) zur Herstellung der Prepregs kann in geeigneten Aggregaten, wie z. B. beheizbaren Rührkesseln, Knetern, oder auch Extrudern, erfolgen, wobei Temperaturobergrenzen von 100 °C nicht überschritten werden sollten.

Im Gegensatz zu DE 102009001793.3 und DE 102009001806.9 werden erfindungsgemäß die Lösungen mit dem Faser förmigen Träger zusammengebracht und zu Prepregs mit dem gewünschten Faservolumenanteil weiterverarbeitet.

Die Herstellung der Prepregs nach dem Lösungs-Imprägnierverfahren kann erfindungsgemäß im Prinzip nach beliebigen Methoden und mittels der bekannten Anlagen und Apparaturenerfolgen.

Die Lösungsimprägnierung wird unter anderem für die Herstellung von Epoxycomposites eingesetzt

["Composites Technologien, Paolo Ermanni (Version 4), Script zur Vorlesung ETH Zürich, August 2007, Kapitel 4.2.2"]. Reaktive Polyurethanzusammensetzungen in Lösung werden dort aber nicht genannt.

Die hohen Temperaturen, wie sie beim Schmelzimprägnierverfahren oder bei der Ansinterung von pulverförmigen reaktiven Polyurethanzusammensetzungen zumindest kurzzeitig vonnöten sind, sind bei diesem erfindungsgemäßen Verfahren nicht erforderlich. Eventuelle Temperaturbelastungen der reaktiven Polyurethanzusammensetzungen werden nur bei der Entfernung des eingesetzten Lösemittels (C) nach der Imprägnierung auftreten, wobei Temperaturen von 80 bis 100 °C nicht überschritten werden sollten, um ein Anreagieren des reaktiven Matrixmaterials zu verhindern.

Die so hergestellten Prepregs können je nach Bedarf zu unterschiedlichen Formen kombiniert und zugeschnitten werden.

Zur Konsolidierung der Prepregs zu einem einzigen Composite und zur Vernetzung des Matrixmaterials zur Matrix werden die Prepregs zugeschnitten, gegebenenfalls vernäht oder anderweitig fixiert und in einer geeigneten Form unter Druck und gegebenenfalls Anlegen von Vakuum verpresst. Im Rahmen dieser Erfindung erfolgt dieser Vorgang der Herstellung der Composites aus den Prepregs je nach Aushärtungszeit bei Temperaturen von oberhalb etwa 160 °C bei Einsatz von reaktiven Matrixmaterialien (Variante I), oder bei mit entsprechenden Katalysatoren versehenen hochreaktiven Matrixmaterialien (Variante II) bei Temperaturen von über 100 °C.

Die erfindungsgemäß hergestellten Prepregs weisen nach Abkühlung auf Raumtemperatur eine sehr hohe Lagerstabilität bei Raumtemperatur auf, sobald das Matrixmaterial einen Tg von mindestens 40 °C aufweist. Diese beträgt je nach enthaltener reaktiver Polyurethanzusammensetzung mindestens einige Tage bei Raumtemperatur, aber in der Regel sind die Prepregs mehrere Wochen bei 40 °C und darunter lagerstabil. Die so hergestellten Prepregs sind nicht klebrig und daher sehr gut zu handhaben und weiter zu verarbeiten. Die erfindungsgemäß eingesetzten reaktiven oder hochreaktiven Polyurethanzusammensetzungen weisen demnach eine sehr gute Haftung und Verteilung auf dem Faser förmigen Träger auf.

Während der Weiterverarbeitung der Prepregs zu Composites (Verbundwerkstoffen) z. B. durch Verpressen bei erhöhten Temperaturen, erfolgt eine sehr gute Imprägnierung des Faser förmigen Trägers, dadurch bedingt, dass die dabei flüssig niedrig viskosen reaktiven oder hochreaktiven Polyurethanzusammensetzungen vor der Vernetzungsreaktion die Faser des Trägers sehr gut benetzen, bevor durch die Vernetzungsreaktion der reaktiven oder hochreaktiven Polyurethanzusammensetzung bei erhöhten Temperaturen eine Vergelung eintritt beziehungsweise die komplette Polyurethanmatrix durchhärtet.

Je nach Zusammensetzung der verwendeten reaktiven oder hochreaktiven Polyurethanzusammensetzung und gegebenenfalls zugesetzten Katalysatoren können sowohl die Geschwindigkeit der Vernetzungsreaktion bei der Herstellung der Composite-Bauteile als auch die Eigenschaften der Matrix in weiten Bereichen variiert werden.

Als Matrixmaterial wird im Rahmen der Erfindung die zur Herstellung der Prepregs eingesetzte reaktive oder hochreaktive Polyurethanzusammensetzung definiert und bei der Beschreibung der Prepregs die auf der Faser durch das erfindungsgemäße Verfahren aufgebrachte noch reaktive oder hochreaktive Polyurethanzusammensetzung.

Die Matrix ist definiert als die im Composite vernetzten Matrixmaterialien aus den reaktiven oder hochreaktiven Polyurethanzusammensetzungen.

### Träger

Der Faser förmige Träger in der vorliegenden Erfindung besteht aus Faser förmigem Material (auch häufig Verstärkungsfasern genannt). Im Allgemeinen ist jegliches Material, aus dem die Fasern bestehen, geeignet, bevorzugt wird jedoch Faser förmiges Material aus Glas, Kohlenstoff, Kunststoffen, wie z. B. Polyamid (Aramid) oder Polyester, Naturfasern oder mineralischen Fasermaterialien wie Basaltfasern oder keramische Fasern (Oxidische Fasern auf Basis von Aluminiumoxiden und/oder Siliciumoxiden) verwendet. Auch Mischungen von Fasertypen, wie z. B. Gewebe-Kombinationen aus Aramid- und Glasfasern, oder Kohlenstoff- und Glasfasern, können verwendet werden. Ebenso sind Hybrid-Composite-Bauteile mit Prepregs aus unterschiedlichen Faser förmigen Trägern herstellbar.

Glasfasern sind hauptsächlich wegen ihres relativ geringen Preises die am häufigsten verwendeten Fasertypen. Prinzipiell sind hier alle Arten von glasbasierenden Verstärkungsfasern geeignet (E-Glas-, S-Glas-, R-Glas-, M-Glas-, C-Glas-, ECR-Glas-, D-Glas-, AR-Glas-, oder Hohlglasfasern). Kohlenstofffasern kommen im Allgemeinen in Hochleistungsverbundverstoffen zum Einsatz, wo auch die im Verhältnis zur Glasfaser niedrigere Dichte bei gleichzeitig hoher Festigkeit ein wichtiger Faktor ist. Kohlenstofffasern (auch Carbonfasern) sind industriell hergestellte Fasern aus kohlenstoffhaltigen Ausgangsmaterialien, die durch Pyrolyse in graphitartig angeordneten Kohlenstoff umgewandelt werden. Man unterscheidet isotrope und anisotrope Typen: isotrope Fasern besitzen nur geringe Festigkeiten und geringere technische Bedeutung, anisotrope Fasern zeigen hohe Festigkeiten und Steifigkeiten bei gleichzeitig geringer Bruchdehnung. Als Naturfasern werden hier alle Textilfasern und Faserwerkstoffe bezeichnet, die aus pflanzlichem und tierischem Material gewonnen werden (z. B. Holz-, Zellulose-, Baumwoll-, Hanf-, Jute-, Leinen-, Sisal-, Bambusfasern). Aramid-Fasern weisen, ähnlich wie auch Kohlenstofffasern, einen negativen Wärmeausdehnungs-koeffizienten auf, werden also bei Erwärmung kürzer. Ihre spezifische Festigkeit und ihr Elastizitätsmodul ist deutlich niedriger als jene von Kohlenstofffasern. In Verbindung mit dem positiven Ausdehnungskoeffizienten des Matrixharzes lassen sich hoch maßhaltige Bauteile fertigen. Gegenüber Kohlenstofffaser verstärkten Kunststoffen ist die Druckfestigkeit von Aramidfaser-Verbundwerkstoffen deutlich geringer. Bekannte Markennamen für Aramidfasern sind Nomex® und Kevlar® von DuPont, oder Teijinconex®, Twaron® und Technora® von Teijin. Besonders geeignet und bevorzugt sind Träger aus Glasfasern, Kohlenstofffasern, Aramidfasern oder keramische Fasern. Bei dem Faser förmigen Material handelt es sich um ein textiles Flächengebilde. Geeignet sind textile Flächengebilde aus Vlies, ebenso sogenannte Maschenware, wie Gewirke und Gestricke, aber auch nicht maschige Gebinde wie Gewebe, Gelege oder Geflechte. Außerdem unterscheidet man Langfaser- und Kurzfasermaterialien als Träger. Ebenfalls erfindungsgemäß geeignet sind Rovings und Garne. Alle genannten Materialien sind im Rahmen der Erfindung als Faser förmiger Träger geeignet. Einen Überblick über Verstärkungsfasern enthält "Composites Technologien, Paolo Ermanni (Version 4), Script zur Vorlesung ETH Zürich, August 2007, Kapitel 7".

### Matrixmaterial

Prinzipiell sind alle, auch sonstige zu bei Raumtemperatur lagerstabilen reaktiven Polyurethanzusammensetzungen als Matrixmaterialen geeignet. Geeignete Polyurethanzusammensetzungen bestehen erfindungsgemäß aus Mischungen aus einem funktionellen Gruppen - reaktiv gegenüber NCO-Gruppen - aufweisenden Polymeren b) (Binder), auch als Harz bezeichnet, und temporär deaktiviertem, das heißt intern blockiertem Di- oder Polyisocyanat, auch als Härter a) (Komponente a)) bezeichnet.

Als funktionelle Gruppen der Polymeren b) (Binder) sind Hydroxylgruppen, Aminogruppen und Thiolgruppen geeignet, welche mit den freien Isocyanatgruppen unter Addition reagieren und somit die Polyurethanzusammensetzung vernetzen und aushärten. Die Binderkomponenten müssen einen Festharzcharakter (Glastemperatur größer als die Raumtemperatur) haben. Als Binder kommen in Frage Polyester, Polyether, Polyacrylate, Polycarbonate und Polyurethane mit einer OH-Zahl von 20 bis 500 mg KOH/Gramm und einer mittleren Molmasse von 250 bis 6000 g/Mol. Besonders bevorzugt werden hydroxylgruppenhaltige Polyester oder Polyacrylate mit einer OH-Zahl von 20 bis 150 mg KOH/Gramm und einem mittleren Molekulargewicht von 500 bis 6000 g/mol. Selbstverständlich können auch Mischungen solcher Polymere eingesetzt werden. Die Menge an den funktionelle Gruppen aufweisenden Polymeren b) wird so gewählt, dass auf jede funktionelle Gruppe der Komponente b) 0,6 bis 2 NCO- Äquivalente oder 0,3 bis 1 Uretdiongruppe der Komponente a) entfällt.

Als Härterkomponente a) werden intern blockierte (Uretdion) Di- und Polyisocyanate eingesetzt.

Die erfindungsgemäß eingesetzten Di- und Polyisocyanate können aus beliebigen aromatischen, aliphatischen, cycloaliphatischen und/oder (cyclo)aliphatischen Di- und/oder Polyisocyanaten bestehen.

Als aromatische Di- oder Polyisocyanate sind prinzipiell alle bekannten aromatischen Verbindungen geeignet. Besonders geeignet sind 1,3- und 1,4-Phenylendiisocyanat, 1,5-Naphthylen-diisocyanat, Tolidindiisocyanat, 2,6-Toluylendiisocyanat, 2,4-Toluylendiisocyanat (2,4-TDI), 2,4'-Diphenylmethandiisocyanat (2,4'-MDI), 4,4'-Diphenylmethandiisocyanat, die Mischungen aus monomeren Diphenylmethandiisocyanaten (MDI) und oligomeren Diphenylmethandiisocyanaten (Polymer-MDI), Xylylendiisocyanat, Tetramethylxylylendiisocyanat und Triisocyanatotoluol.

Geeignete aliphatische Di- oder Polyisocyanate besitzen vorteilhafterweise 3 bis 16 Kohlenstoffatome, vorzugsweise 4 bis 12 Kohlenstoffatome, im linearen oder verzweigten Alkylenrest und geeignete cycloaliphatische oder (cyclo)aliphatische Diisocyanate vorteilhafterweise 4 bis 18 Kohlenstoffatome, vorzugsweise 6 bis 15 Kohlenstoffatome, im Cycloalkylenrest. Unter (cyclo)aliphatischen Diisocyanaten versteht der Fachmann hinlänglich gleichzeitig cyclisch und aliphatisch gebundene NCO-Gruppen, wie es z. B. beim Isophorondiisocyanat der Fall ist. Demgegenüber versteht man unter cycloaliphatischen Diisocyanaten solche, die nur direkt am cycloaliphatischen Ring gebundene NCO-Gruppen aufweisen, z. B. H₁₂MDI. Beispiele sind Cyclohexandiisocyanat, Methylcyclohexandiisocyanat, Ethylcyclohexandiisocyanat, Propylcyclohexandiisocyanat, Methyldiethylcyclohexandiisocyanat, Propandiisocyanat, Butandiisocyanat, Pentandiisocyanat, Hexandiisocyanat, Heptandiisocyanat, Octandiisocyanat, Nonandiisocyanat, Nonantriisocyanat, wie 4-Isocyanatomethyl-1,8-octandiisocyanat (TIN), Dekandi- und triisocyanat, Undekandi- und -triisocyanat, Dodecandi- und -triisocyanate.

Bevorzugt werden Isophorondiisocyanat (IPDI), Hexamethylendiisocyanat (HDI), Diisocyanatodicyclohexylmethan (H₁₂MDI), 2-Methylpentandiisocyanat (MPDI), 2,2,4-Trimethylhexamethylendiisocyanat/2,4,4-Trimethylhexamethylendiisocyanat (TMDI), Norbornandiisocyanat (NBDI). Ganz besonders bevorzugt werden IPDI, HDI, TMDI und H₁₂MDI eingesetzt, wobei auch die Isocyanurate einsetzbar sind. Ebenfalls geeignet sind 4-Methyl-cyclohexan-1,3-diisocyanat, 2-Butyl-2-ethylpentamethylen-diisocyanat, 3(4)-Isocyanatomethyl-1-methylcyclohexylisocyanat, 2-Isocyanatopropylcyclohexyl-isocyanat, 2,4'-Methylenbis(cyclohexyl)diisocyanat, 1,4-Diisocyanato-4-methyl-pentan.

Selbstverständlich können auch Gemische der Di- und Polyisocyanate eingesetzt werden.

Weiterhin werden vorzugsweise Oligo- oder Polyisocyanate verwendet, die sich aus den genannte Di- oder Polyisocyanaten oder deren Mischungen durch Verknüpfung mittels Urethan-, Allophanat-, Harnstoff-, Biuret-, Uretdion-, Amid-, Isocyanurat-, Carbodiimid-, Uretonimin-, Oxadiazintrion- oder Iminooxadiazindion-Strukturen herstellen lassen. Besonders geeignet sind Isocyanurate, insbesondere aus IPDI und HDI.

Die erfindungsgemäß verwendeten Polyisocyanate sind blockiert.

Eine interne Blockierung wird verwendet. Die interne Blockierung erfolgt über eine Dimerbildung über Uretdion-Strukturen, die bei erhöhter Temperatur wieder in die ursprünglich vorhandenen Isocyanat-Strukturen zurückspalten und damit die Vernetzung mit dem Binder in Gang setzen.

Optional können die reaktiven Polyurethanzusammensetzungen zusätzliche Katalysatoren enthalten. Es handelt sich hierbei um metallorganischen Katalysatoren, wie z. B. Dibutylzinndilaurat (DBTL), Zinnoctoat, Bismuthneodecanoat, oder aber tertiäre Amine, wie z. B. 1,4-Diazabicylco[2.2.2.]octan, in Mengen von 0,001 - 1 Gew.-%. Diese erfindungsgemäß eingesetzten reaktiven Polyurethanzusammensetzungen werden bei normalen Bedingungen, z. B. mit DBTL-Katalyse, ab 160 °C, üblicherweise ab ca. 180 °C ausgehärtet und als bezeichnet.

Für die Herstellung der reaktiven Polyurethanzusammensetzungen können die in der Pulverlacktechnologie üblichen Zusatzstoffe, wie Verlaufsmittel, z. B. Polysilicone oder Acrylate, Lichtschutzmittel z. B. sterisch gehinderte Amine, oder andere Hilfsmittel, wie sie z. B. in EP 669 353 beschrieben wurden, in einer Gesamtmenge von 0,05 bis 5 Gew.-% zugesetzt werden. Füllstoffe und Pigmente wie z. B. Titandioxid können in einer Menge bis zu 30 Gew.-% der Gesamtzusammensetzung zugesetzt werden.

Reaktiv (Variante I) bedeutet im Rahmen dieser Erfindung, dass die erfindungsgemäß eingesetzten reaktiven Polyurethanzusammensetzungen wie oben beschrieben bei Temperaturen ab 160 °C, und zwar je nach Art des Trägers aushärten.

Die erfindungsgemäß eingesetzten reaktiven Polyurethanzusammensetzungen werden bei normalen Bedingungen, z. B. mit DBTL-Katalyse, ab 160 °C, üblicherweise ab ca. 180 °C ausgehärtet. Die Zeit zur Aushärtung der erfindungsgemäß eingesetzten Polyurethanzusammensetzung liegt in der Regel innerhalb von 5 bis 60 Minuten.

Bevorzugt wird bei der vorliegenden Erfindung ein Matrixmaterial B) eingesetzt, aus einer reaktiven Uretdiongruppen haltigen Polyurethanzusammensetzungen B), im Wesentlichen enthaltend
a) mindestens einen Uretdiongruppen haltigen Härter, basierend auf Polyadditionsverbindungen aus aliphatischen, (cyclo)aliphatischen oder cycloaliphatischen Uretdiongruppen enthaltende Polyisocyanaten und hydroxylgruppenhaltigen Verbindungen, wobei der Härter unterhalb von 40 °C in fester Form und oberhalb von 125 °C in flüssiger Form vorliegt und einen freien NCO-Gehalt von kleiner 5 Gew.-% und einem Uretdiongehalt von 3 - 25 Gew.-% aufweist,
b) mindestens ein hydroxylgruppenhaltiges Polymer, das unterhalb von 40 °C in fester Form und oberhalb von 125 °C in flüssiger Form vorliegt und einer OHZahl zwischen 20 und 200 mg KOH / Gramm,
c) gegebenenfalls mindestens einen Katalysator,
d) gegebenenfalls aus der Polyurethanchemie bekannte Hilfs- und Zusatzstoffe,
so dass die beiden Komponenten a) und b) in dem Verhältnis vorliegen, dass auf jede Hydroxylgruppe der Komponente b) 0,3 bis 1 Uretdiongruppe der Komponente a) entfällt, bevorzugt 0,45 bis 0,55. Letzteres entspricht einem NCO/OH-Verhältnis von 0,9 bis 1,1 zu 1.

Uretdiongruppen enthaltende Polyisocyanate sind wohlbekannt und werden beispielsweise in US 4,476,054, US 4,912,210, US 4,929,724 sowie EP 417 603 beschrieben. Ein umfassender Überblick über industriell relevante Verfahren zur Dimerisierung von Isocyanaten zu Uretdionen liefert das J. Prakt. Chem. 336 (1994) 185-200. Im Allgemeinen erfolgt die Umsetzung von Isocyanaten zu Uretdionen in Gegenwart löslicher Dimerisierungskatalysatoren wie z. B. Dialkylaminopyridinen, Trialkylphosphinen, Phosphorigsäure-triamiden oder Imdidazolen. Die Reaktion - optional in Lösemitteln, bevorzugt aber in Abwesenheit von Lösemitteln durchgeführt - wird bei Erreichen eines gewünschten Umsatzes durch Zusatz von Katalysatorgiften abgestoppt. Überschüssiges monomeres Isocyanat wird im Anschluss durch Kurzwegverdampfung abgetrennt. Ist der Katalysator flüchtig genug, kann das Reaktionsgemisch im Zuge der Monomerabtrennung vom Katalysator befreit werden. Auf den Zusatz von Katalysatorgiften kann in diesem Fall verzichtet werden. Grundsätzlich ist zur Herstellung von Uretdiongruppen enthaltenden Polyisocyanaten eine breite Palette von Isocyanaten geeignet. Es können die oben genannten Di- und Polyisocyanate verwendet werden. Bevorzugt sind aber Di- und Polyisocyanate aus beliebigen aliphatischen, cycloaliphatischen und/oder (cyclo)aliphatischen Di- und/oder Polyisocyanaten. Erfindungsgemäß werden Isophorondiisocyanat (IPDI), Hexamethylendiisocyanat (HDI), Diisocyanatodicyclohexylmethan (H₁₂MDI), 2-Methylpentandiisocyanat (MPDI), 2,2,4-Trimethylhexamethylendiisocyanat/2,4,4-Trimethylhexamethylendiisocyanat (TMDI), Norbornandiisocyanat (NBDI) verwendet. Ganz besonders bevorzugt werden IPDI, HDI, TMDI und H₁₂MDI eingesetzt, wobei auch die Isocyanurate einsetzbar sind.

Ganz besonders bevorzugt wird für das Matrixmaterial IPDI und HDI verwendet. Die Umsetzung dieser Uretdiongruppen enthaltenden Polyisocyanate zu Uretdiongruppen haltigen Härtern a) beinhaltet die Reaktion der freien NCOGruppen mit hydroxylgruppenhaltigen Monomeren oder Polymeren, wie z. B. Polyestern, Polythioethern, Polyethern, Polycaprolactamen, Polyepoxiden, Polyesteramiden, Polyurethanen oder niedermolekularen Di-, Tri- und/oder Tetraalkoholen als Kettenverlängerer und gegebenenfalls Monoaminen und/oder Monoalkoholen als Kettenabbrecher und wurde schon häufig beschrieben (EP 669 353, EP 669 354, DE 30 30 572, EP 639 598 oder EP 803 524).

Bevorzugte Uretdiongruppen aufweisende Härter a) haben einen freien NCO-Gehalt von weniger als 5 Gew.-% und einen Gehalt an Uretdiongruppen von 3 bis 25 Gew.-%, bevorzugt 6 bis 18 Gew.-% (berechnet als C₂N₂O₂, Molekulargewicht 84). Bevorzugt werden Polyester und monomere Dialkohole. Außer den Uretdiongruppen können die Härter auch Isocyanurat-, Biuret-, Allophanat-, Urethan- und/oder Harnstoff-Strukturen aufweisen.

Bei den hydroxylgruppenhaltigen Polymeren b) werden bevorzugt Polyester, Polyether, Polyacrylate, Polyurethane und/oder Polycarbonate mit einer OH-Zahl von 20 - 200 in mg KOH/Gramm eingesetzt. Besonders bevorzugt werden Polyester mit einer OH-Zahl von 30 - 150, einem mittleren Molekulargewicht von 500 - 6000 g/mol, die unterhalb von 40 °C in fester Form und oberhalb von 125 °C in flüssiger Form vorliegen, verwendet. Solche Bindemittel sind beispielsweise in EP 669 354 und EP 254 152 beschrieben worden. Selbstverständlich können auch Mischungen solcher Polymere eingesetzt werden. Die Menge an den hydroxylgruppenhaltigen Polymeren b) wird so gewählt, dass auf jede Hydroxylgruppe der Komponente b) 0,3 bis 1 Uretdiongruppe der Komponente a), bevorzugt 0,45 bis 0,55, entfällt. Optional können in den erfindungsgemäßen reaktiven Polyurethanzusammensetzungen B) zusätzliche Katalysatoren c) enthalten sein. Es handelt sich hierbei um metallorganischen Katalysatoren, wie z. B. Dibutylzinndilaurat, Zinkoctoat, Bismuthneodecanoat, oder aber tertiäre Amine, wie z. B. 1,4-Diazabicylco[2.2.2.]octan, in Mengen von 0,001 - 1 Gew.-%. Diese erfindungsgemäß eingesetzten reaktiven Polyurethanzusammensetzungen werden bei normalen Bedingungen, z. B. mit DBTL-Katalyse, ab 160 °C, üblicherweise ab ca. 180 °C ausgehärtet und als Variante I bezeichnet.

Für die Herstellung der erfindungsgemäßen reaktiven Polyurethanzusammensetzungen können die in der Pulverlacktechnologie üblichen Zusatzstoffe d) wie Verlaufsmittel, z. B. Polysilicone oder Acrylate, Lichtschutzmittel z. B. sterisch gehinderte Amine, oder andere Hilfsmittel, wie sie z. B. in EP 669 353 beschrieben wurden, in einer Gesamtmenge von 0,05 bis 5 Gew.-% zugesetzt werden. Füllstoffe und Pigmente wie z. B. Titandioxid können in einer Menge bis zu 30 Gew.-% der Gesamtzusammensetzung zugesetzt werden.

Die erfindungsgemäß eingesetzten reaktiven Polyurethanzusammensetzungen werden bei normalen Bedingungen, z. B. mit DBTL-Katalyse, ab 160 °C, üblicherweise ab ca. 180 °C ausgehärtet. Die erfindungsgemäß eingesetzten reaktiven Polyurethanzusammensetzungen bieten einen sehr guten Verlauf und damit eine gute Imprägnierfähigkeit und im ausgehärteten Zustand eine ausgezeichnete Chemikalienbeständigkeit. Bei Verwendung von aliphatischen Vernetzern (z. B. IPDI oder H12MDI) wird zusätzlich noch eine gute Witterungsbeständigkeit erreicht.

Besonders bevorzugt wird bei der Erfindung ein Matrixmaterial eingesetzt
aus
B) mindestens einer hochreaktiven Uretdiongruppen haltigen Polyurethanzusammensetzung, im Wesentlichen enthaltend
   a) mindestens einen Uretdiongruppen haltigen Härter
      und
   b) optional mindestens ein Polymer mit gegenüber NCO-Gruppen reaktiven funktionellen Gruppen;
   c) 0,1 bis 5 Gew.-% mindestens einen Katalysator ausgewählt aus quarternären Ammoniumsalzen und/oder quarternären Phosphoniumsalzen mit Halogenen, Hydroxiden, Alkoholaten oder organischen oder anorganischen Säureanionen als Gegenion;
      und
   d) 0,1 bis 5 Gew.-% mindestens einen Co-Katalysator, ausgewählt aus
      d1) mindestens einem Epoxid
         und/oder
      d2) mindestens einem Metallacetylacetonat und/oder quarternären Ammoniumacetylacetonat und/oder quarternären Phosphoniumacetylacetonat;
   e) gegebenenfalls aus der Polyurethanchemie bekannte Hilfs- und Zusatzstoffe.
   Ganz besonders wird ein Matrixmaterial B) eingesetzt aus
B) mindestens einer hochreaktiven pulverförmigen Uretdiongruppen haltigen Polyurethanzusammensetzung als Matrixmaterial, im Wesentlichen enthaltend
   a) mindestens einen Uretdiongruppen haltigen Härter, basierend auf Polyadditionsverbindungen aus aliphatischen, (cyclo)aliphatischen oder cycloaliphatischen Uretdiongruppen enthaltenen Polyisocyanaten und hydroxylgruppenhaltigen Verbindungen, wobei der Härter unterhalb von 40 °C in fester Form und oberhalb von 125 °C in flüssiger Form vorliegt und einen freien NCO-Gehalt von kleiner 5 Gew.-% und einem Uretdiongehalt von 3 - 25 Gew.-% aufweist,
   b) mindestens ein hydroxylgruppenhaltiges Polymer, das unterhalb von 40 °C in fester Form und oberhalb von 125 °C in flüssiger Form vorliegt und einer OH-Zahl zwischen 20 und 200 mg KOH / Gramm;
   c) 0,1 bis 5 Gew.-% mindestens einen Katalysator ausgewählt aus quarternären Ammoniumsalzen und/oder quarternären Phosphoniumsalzen mit Halogenen, Hydroxiden, Alkoholaten oder organischen oder anorganischen Säureanionen als Gegenion;
      und
   d) 0,1 bis 5 Gew.-% mindestens einen Co-Katalysator, ausgewählt aus
      d1) mindestens einem Epoxid
         und/oder
      d2) mindestens einem Metallacetylacetonat und/oder quarternären Ammoniumacetylacetonat und/oder quarternären Phosphoniumacetylacetonat;
   e) gegebenenfalls aus der Polyurethanchemie bekannte Hilfs- und Zusatzstoffe,
so dass die beiden Komponenten a) und b) in dem Verhältnis vorliegen, dass auf jede Hydroxylgruppe der Komponente b) 0,3 bis 1 Uretdiongruppe der Komponente a) entfällt, bevorzugt 0,6 bis 0,9. Letzteres entspricht einem NCO/OH-Verhältnis von 0,6 bis 2 zu 1 bzw. 1,2 bis 1,8 zu 1. Diese erfindungsgemäß eingesetzten hochreaktiven Polyurethanzusammensetzungen werden Temperaturen von 100 bis 160 °C ausgehärtet und als Variante II bezeichnet.

Geeignete hochreaktive Urediongruppen haltige Polyurethanzusammensetzungen enthalten erfindungsgemäß Mischungen aus temporär deaktivierten, das heißt Uretdiongruppen haltigen (intern blockierte) Di- oder Polyisocyanaten, auch als Härter a) bezeichnet, und den erfindungsgemäß enthaltenen Katalysatoren c) und d) und optional zusätzlich ein funktionelle Gruppen - reaktiv gegenüber NCO-Gruppen - aufweisendes Polymer (Binder), auch als Harz b) bezeichnet. Die Katalysatoren gewährleisten eine Aushärtung der Urediongruppen haltigen Polyurethanzusammensetzungen bei Niedrigtemperatur. Die Urediongruppen haltigen Polyurethanzusammensetzungen sind somit hochreaktiv.

Als Komponente a) und b) werden solche wie oben beschrieben eingesetzt.

Als Katalysatoren unter c) werden quarternäre Ammoniumsalze, bevorzugt Tetralkylammoniumsalze und/oder quarternäre Phosphoniumsalze mit Halogenen, Hydroxiden, Alkoholaten oder organischen oder anorganischen Säureanionen als Gegenion, eingesetzt. Beispiele dafür sind:
Tetramethylammoniumformiat, Tetramethylammoniumacetat, Tetramethylammoniumpropionat, Tetramethylammoniumbutyrat, Tetramethylammoniumbenzoat, Tetraethylammoniumformiat, Tetraethylammoniumacetat, Tetraethylammoniumpropionat, Tetraethylammoniumbutyrat, Tetraethylammoniumbenzoat, Tetrapropylammoniumformiat, Tetrapropylammoniumacetat, Tetrapropylammoniumpropionat, Tetrapropylammoniumbutyrat, Tetrapropylammoniumbenzoat, Tetrabutylammoniumformiat, Tetrabutylammoniumacetat, Tetrabutylammoniumpropionat, Tetrabutylammoniumbutyrat und Tetrabutylammoniumbenzoat und Tetrabutylphosphoniumacetat, Tetrabutylphosphoniumformiat und Ethyltriphenylphosphoniumacetat, Tetrabutylphosphoniumbenzotriazolat, Tetraphenylphosphoniumphenolat und Trihexyltetradecylphosphoniumdecanoat, Methyltributylammoniumhydroxid, Methyltriethylammoniumhydroxid, Tetramethylammoniumhydroxid, Tetraethylammoniumhydroxid, Tetrapropylammoniumhydroxid, Tetrabutylammoniumhydroxid, Tetrapentylammoniumhydroxid, Tetrahexylammoniumhydroxid, Tetraoctylammoniumhydroxid, Tetradecylammoniumhydroxid, Tetradecyltrihexylammoniumhydroxid, Tetraoctadecylammoniumhydroxid, Benzyltrimethylammoniumhydroxid, Benzyltriethylammoniumhydroxid, Tri-methylphenylammoniumhydroxid, Triethylmethylammoniumhydroxid, Tri-methylvinylammoniumhydroxid, Methyltributylammoniummethanolat, Methyltriethylammoniummethanolat, Tetramethylammoniummethanolat, Tetraethylammoniummethanolat, Tetrapropylammoniummethanolat, Tetrabutylammoniummethanolat, Tetrapentylammoniummethanolat, Tetrahexylammoniummethanolat, Tetraoctylammoniummethanolat, Tetradecylammoniummethanolat, Tetradecyltrihexylammoniummethanolat, Tetraoctadecylammoniummethanolat, Benzyltrimethylammoniummethanolat, Benzyltriethylammoniummethanolat, Trimethylphenylammoniummethanolat, Triethylmethylammoniummethanolat, Trimethylvinylammoniummethanolat, Methyltributylammoniumethanolat, Methyltriethylammoniumethanolat, Tetramethylammoniumethanolat, Tetraethylammoniumethanolat, Tetrapropylammoniumethanolat, Tetrabutylammoniumethanolat, Tetrapentylammoniumethanolat, Tetrahexylammoniumethanolat, Tetraoctylammoniummethanolat, Tetradecylammoniumethanolat, Tetradecyltrihexylammoniumethanolat, Tetraoctadecylammoniumethanolat, Benzyltrimethylammoniumethanolat, Benzyltriethylammoniumethanolat, Tri-methylphenylammoniumethanolat, Triethylmethylammoniumethanolat, Tri-methylvinylammoniumethanolat, Methyltributylammoniumbenzylat, Methyltriethylammoniumbenzylat, Tetramethylammoniumbenzylat, Tetraethylammoniumbenzylat, Tetrapropylammoniumbenzylat, Tetrabutylammoniumbenzylat, Tetrapentylammoniumbenzylat, Tetrahexylammoniumbenzylat, Tetraoctylammoniumbenzylat, Tetradecylammoniumbenzylat, Tetradecyltrihexylammoniumbenzylat, Tetraoctadecylammoniumbenzylat, Benzyltrimethylammoniumbenzylat, Benzyltriethylammoniumbenzylat, Trimethylphenylammoniumbenzylat, Triethylmethylammoniumbenzylat, Trimethylvinylammoniumbenzylat, Tetramethylammoniumfluorid, Tetraethylammoniumfluorid, Tetrabutylammoniumfluorid, Tetraoctylammoniumfluorid, Benzyltrimethylammoniumfluorid, Tetrabutylphosphoniumhydroxid, Tetrabutylphosphoniumfluorid, Tetrabutylammoniumchlorid, Tetrabutylammoniumbromid, Tetrabutylammoniumiodid, Tetraethylammoniumchlorid, Tetraethylammoniumbromid, Tetraethylammoniumiodid, Tetramethylammoniumchlorid, Tetramethylammoniumbromid, Tetramethylammoniumiodid, Benzyltrimethylammoniumchlorid, Benzyltriethylammoniumchlorid, Benzyltripropylammoniumchlorid, Benzyltributylammoniumchlorid, Methyltributylammoniumchlorid, Methyltripropylammoniumchlorid, Methyltriethylammoniumchlorid, Methyltriphenylammoniumchlorid, Phenyltrimethylammoniumchlorid, Benzyltrimethylammoniumbromid, Benzyltriethylammoniumbromid, Benzyltripropylammoniumbromid, Benzyltributylammoniumbromid, Methyltributylammoniumbromid, Methyltripropylammoniumbromid, Methyltriethylammoniumbromid, Methyltriphenylammoniumbromid, Phenyltrimethylammoniumbromid, Benzyltrimethylammoniumiodid, Benzyltriethylammoniumiodid, Benzyltripropylammoniumiodid, Benzyltributylammoniumiodid, Methyltributylammoniumiodid, Methyltripropylammoniumiodid, Methyltriethylammoniumiodid, Methyltriphenylammoniumiodid und Phenyltrimethylammoniumiodid, Methyltributylammoniumhydroxid, Methyltriethylammoniumhydroxid, Tetramethylammoniumhydroxid, Tetraethylammoniumhydroxid, Tetrapropylammoniumhydroxid, Tetrabutylammoniumhydroxid, Tetrapentylammoniumhydroxid, Tetrahexylammoniumhydroxid, Tetraoctylammoniumhydroxid, Tetradecylammoniumhydroxid, Tetradecyltrihexylammoniumhydroxid, Tetraoctadecylammoniumhydroxid, Benzyltrimethylammoniumhydroxid, Benzyltriethylammoniumhydroxid, Trimethylphenylammoniumhydroxid, Triethylmethylammoniumhydroxid, Trimethylvinylammoniumhydroxid, Tetramethylammoniumfluorid, Tetraethylammoniumfluorid, Tetrabutylammoniumfluorid, Tetraoctylammoniumfluorid und Benzyltrimethylammoniumfluorid. Diese Katalysatoren können allein oder in Mischungen zugesetzt werden. Bevorzugt werden Tetraethylammoniumbenzoat und Tetrabutylammoniumhydroxid verwendet.

Der Anteil an Katalysatoren c) kann 0,1 bis 5 Gew.-% betragen, bevorzugt von 0,3 bis 2 Gew.-%, bezogen auf die Gesamtformulierung des Matrixmaterials.

Eine erfindungsgemäße Variante schließt die Anbindung solcher Katalysatoren c) an die funktionellen Gruppen der Polymere b) mit ein. Außerdem können diese Katalysatoren mit einer inerten Hülle umgeben und damit verkapselt sein.

Als Co-Katalysatoren d1) werden Epoxide eingesetzt. In Frage kommen dabei z. B. Glycidylether und Glycidylester, aliphatische Epoxide, Diglycidylether auf Basis Bisphenol A und Glycidylmethacrylate. Beispiele für solche Epoxide sind Triglycidylisocyanurat (TGIC, Handelsname ARALDIT 810, Huntsman), Gemische aus Terephthalsäurediglycidylester und Trimelitsäuretriglycidylester (Handelsname ARALDIT PT 910 und 912, Huntsman), Glycidylester der Versaticsäure (Handelsname KARDURA E10, Shell), 3,4-Epoxycyclohexylmethyl-3',4'-epoxycyclohexancarboxylat (ECC), Diglycidylether auf Basis Bisphenol A (Handelsname EPIKOTE 828, Shell) Ethylhexylglycidylether, Butylglycidylether, Pentaerythrittetraglycidylether, (Handelsname POLYPOX R 16, UPPC AG) sowie andere Polypoxtypen mit freien Epoxygruppen. Es können auch Mischungen eingesetzt werden. Bevorzugt werden verwendet ARALDIT PT 910 und 912 eingesetzt.

Als Co-Katalysatoren d2) kommen Metallacetylacetonate in Frage. Beispiele dafür sind Zinkacetylacetonat, Lithiumacetylacetonat und Zinnacetylacetonat, allein oder in Mischungen. Bevorzugt wird Zinkacetylacetonat eingesetzt.

Als Co-Katalysatoren d2) kommen ausserdem quarternäre Ammoniumacetylacetonate oder quarternäre Phosphoniumacetylacetonate in Frage.

Beispiele für solche Katalysatoren sind Tetramethylammoniumacetylacetonat, Tetraethylammoniumacetylacetonat, Tetrapropylammoniumacetylacetonat, Tetrabutylammoniumacetylacetonat, Benzyltrimethylammoniumacetylacetonat, Benzyltriethylammoniumacetylacetonat, Tetramethylphosphoniumacetylacetonat, Tetraethylphosphoniumacetylacetonat, Tetrapropylphosphoniumacetylacetonat, Tetrabutylphosphoniumacetylacetonat, Benzyltrimethylphosphoniumacetylacetonat, Benzyltriethylphosphoniumacetylacetonat. Besonders bevorzugt werden Tetraethylammoniumacetylacetonat und Tetrabutylammoniumacetylacetonat eingesetzt. Selbstverständlich können auch Mischungen solcher Katalysatoren verwendet werden.

Der Anteil an Co-Katalysatoren d1) und/oder d2) kann von 0,1 bis 5 Gew.-% betragen, bevorzugt von 0,3 bis 2 Gew.-%, bezogen auf die Gesamtformulierung des Matrixmaterials.

Mit Hilfe der erfindungsgemäß eingesetzten hochreaktiven und somit bei Niedrigtemperatur härtenden Polyurethanzusammensetzungen B) kann bei 100 bis 160 °C Aushärtungstemperatur nicht nur Energie und Aushärtungszeit gespart werden, sondern es lassen sich auch viele Temperatur sensible Träger verwenden.

Hochreaktiv (Variante II) bedeutet im Rahmen dieser Erfindung, dass die erfindungsgemäß eingesetzten Uretdiongruppen haltigen Polyurethanzusammensetzungen bei Temperaturen von 100 bis 160 °C, und zwar je nach Art des Trägers aushärten. Bevorzugt beträgt diese Aushärtungstemperatur 120 bis 150 °C, besonders bevorzugt von 130 bis 140 °C. Die Zeit zur Aushärtung der erfindungsgemäß eingesetzten Polyurethanzusammensetzung liegt innerhalb von 5 bis 60 Minuten.

Die erfindungsgemäß eingesetzten hochreaktiven Urediongruppen haltigen Polyurethanzusammensetzungen bieten einen sehr guten Verlauf und damit eine gute Imprägnierfähigkeit und im ausgehärteten Zustand eine ausgezeichnete Chemikalienbeständigkeit. Bei Verwendung von aliphatischen Vernetzern (z. B. IPDI oder H₁₂MDI) wird zusätzlich noch eine gute Witterungsbeständigkeit erreicht.

Als geeignete Lösemittel für das erfindungsgemäße Verfahren können alle aprotischen Flüssigkeiten verwendet werden, die nicht reaktiv gegenüber den reaktiven Polyurethanzusammensetzungen sind, ein ausreichendes Lösevermögen gegenüber den eingesetzten einzelnen Komponenten der reaktiven Polyurethanzusammensetzung aufweisen und im Rahmen des Prozessschrittes der Lösemittelentfernung bis auf geringfügige Spuren (< 0,5 Gewichts-%) aus dem mit der reaktiven Polyurethanzusammensetzung imprägnierten Prepreg abgezogen werden können, wobei eine Recyclierung des abgetrennten Lösemittels vorteilhaft ist.

Beispielhaft seien hier genannt: Ketone (Aceton, Methylethylketon, Methylisobutylketon,Cyclohexanon), Ether (Tetrahydrofuran), Ester (n-Propylacetat, n-Butylacetat, Isobutylacetat, 1,2-Propylencarbonat, Propylenglykol-Methylether-Acetat).

Die erfindungsgemäß hergestellten Prepregs als auch die Composite-Bauteile weisen einen Faservolumenanteil von größer 50 %, bevorzugt von größer 50 - 70 %, besonders bevorzugt von 50 bis 65 % auf.

Die erfindungsgemäß als Matrixmaterial verwendeten reaktiven oder hochreaktiven Polyurethanzusammensetzungen bestehen im Wesentlichen aus einer Mischung aus einem reaktiven Harz und einem Härter. Diese Mischung hat nach einer Schmelzehomogenisierung einen Tg von mindestens 40 °C und reagiert in der Regel erst oberhalb von 160 °C, bei den reaktiven Polyurethanzusammensetzungen, oder oberhalb von 100 °C bei den hochreaktiven Polyurethanzusammensetzungen zu einem vernetzten Polyurethan und bildet somit die Matrix des Composites. Das bedeutet, dass die erfindungsgemäßen Prepregs nach ihrer Herstellung aus dem Träger und der applizierten reaktiven Polyurethanzusammensetzung als Matrixmaterial, welche in unvernetzter, aber reaktiven Form vorliegt, aufgebaut sind.

Die Prepregs sind also lagerstabil, in der Regel mehrere Tage und sogar Wochen und können somit jederzeit zu Composites weiterverarbeitet werden. Dies ist der wesentliche Unterschied zu den bereits oben beschriebenen 2-Komponenten-Systemen, die reaktiv und nicht lagerstabil sind, da diese nach dem Aufbringen sofort beginnen zu Polyurethanen zu reagieren und vernetzen.

Das erfindungsgemäße Verfahren kann mittels der bekannten Anlagen und Apparaturen gemäß Reaction Injection Moulding (RIM), Reinforced Reaction Injection Moulding (RRIM), Pultrusinsverfahren, durch Aufbringen der Lösung in einem Walzenstuhl oder mittels eines heissen Rakels, oder weiteren Verfahren durchgeführt werden.

Gegenstand der Erfindung ist auch die Verwendung der Prepregs hergestellt nach insbesondere mit Faser förmigen Trägern aus Glas-, Kohle- oder Aramid-Fasern.

Gegenstand der Erfindung ist auch die Verwendung der erfindungsgemäß hergestellten Prepregs, zur Herstellung von Composites im Boots- und Schiffbau, in der Luft- und Raumfahrtechnik, im Automobilbau, für Zweiräder, bevorzugt Motorräder und Fahrräder, in den Bereichen Automotive, Construction, Medizintechnik, Sport, Elektro- und Elektronik-Industrie, Energieerzeugungsanlagen, z. B. für Rotorblätter bei Windkraftanlagen.

Gegenstand der Erfindung sind auch die nach dem erfindungsgemäßen Verfahren hergestellten Prepregs.

Gegenstand der Erfindung sind auch die aus den erfindungsgemäß hergestellten Prepregs hergestellten Composite-Bauteile.

Nachfolgend wird die Erfindung durch Beispiele erläutert.

### Beispiele

### Verwendete Glasfasergelege/-gewebe:

Folgende Glasfasergelege/-gewebe wurden in den Beispielen verwendet, Glasfilamentgewebe 296 g/m² - Atlas, Finish FK 144 (Interglas 92626)

### Reaktive Polyurethanzusammensetzung

Es wurden reaktive Polyurethanzusammensetzungen mit den folgenden Rezepturen zur Herstellung der Prepregs und der Composites verwendet.

| *Beispiel 1* | | | | |
|---|---|---|---|---|
| VESTAGON BF-9030 (NCO-Gesamt: 11,0 %) | uretdiongruppenhaltige Härterkomponente a) | 10,84 Gew.-% | | Evonik Degussa |
| Crylcoat 2839-0 (OHZ 54,9 mg KOH/g) | Hydroxyl Polyester Binder b) | 28,98 Gew.-% | | Cytec Industries Inc. |
| Benzoin | Entgasungsmittel | 0,18 Gew.-% | | Aldrich |
| THF / Cyclohexanon (im Verhältnis 40/20) | Lösemittel c) | 60,00 Gew.-% | | Fluka |

| *Beispiel 2* | | | | |
|---|---|---|---|---|
| VESTAGON BF-9030 (NCO-Gesamt: 11,0 %) | uretdiongruppenhaltige Härterkomponente a) | 10,84 Gew.-% | | Evonik Degussa |
| Crylcoat 2839-0 (OHZ 54,9 mg KOH/g) | Hydroxyl Polyester Binder b) | 28,98 Gew.-% | | Cytec Industries Inc. |
| Benzoin | Entgasungsmittel | 0,18 Gew.-% | | Aldrich |
| THF | Lösemittel c) | 60,00 Gew.-% | | Fluka |

Die Einsatzstoffe aus der Tabelle werden in einem Vormischer innig vermischt und anschließend im angegebenen Lösemittel gelöst.

Zur Herstellung des Prepregs wird das Glasfasergewebe mit der Lösung der Matrixmaterialien getränkt. Die Prepregs werden im Ofen bei Temperaturen von 50 bis 70°C, ggf. unter Anlegen von Vakuum bis zur Gewichtskonstanz getrocknet. Der Matrixvolumenanteil wird im Beispiel 1 (10 Tests) zu 34,2 % und im Beispiel 2 (6 Tests) auf 33,9 % bestimmt. Die Faservolumenanteile sind dementsprechend 65,8 % (Beispiel 1) und 66,1 % (Beispiel 2).

### DSC-Messungen

Die DSC-Untersuchungen (Glasübergangstemperatur-Bestimmungen und ReaktionsEnthalpie-Messungen) werden mit einem Mettler Toledo DSC 821e nach
DIN 53765 durchgeführt.

Die DSC Untersuchungen der Prepregs aus den Beispielen 1 bzw. 2 ergeben folgende Ergebnisse:

| | Bsp.1 | Bsp.2 |
|---|---|---|
| Tg (1. Aufheizen) in °C | 35 | 43 |
| Exothermer Peak (1. Aufheizen) in °C | 199 | 200 |
| Exothermer Wärmestrom (1. Aufheizen) in J/g | 18 | 23 |
| Tg (2. Aufheizen) in °C | 70 | 71 |

Die Glastemperaturen, die beim zweiten Aufheizen gemessen werden, sind die Glastemperaturen des abreagierten/vernetzten Matrixmaterials.

### Lagerstabilität der Prepregs

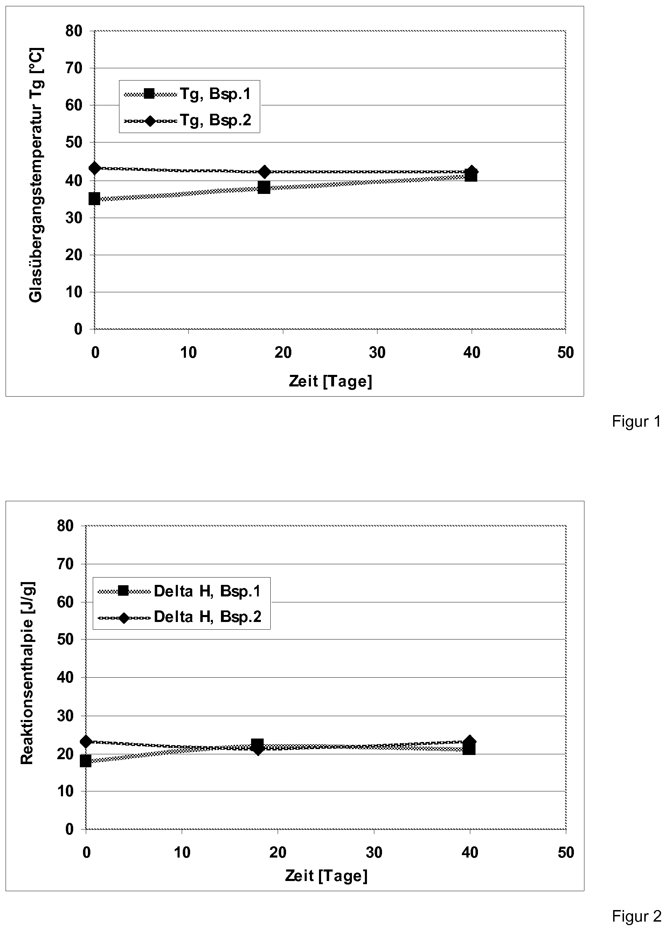

Die DSC Untersuchungen der Prepregs aus den Beispielen 1 bzw. 2 ergeben folgende Ergebnisse gemessen nach 18 bzw. 40 Tagen ist den Figuren 1 und 2 zu entnehmen. Die gemessenen Reaktionsenthalpien nehmen im Verlauf der Lagerung nicht signifikant ab, was die Reaktionsfähigkeit des Matrixmaterials belegt.

### Composite-Bauteil-Herstellung

Die Composite-Bauteile werden über eine dem Fachmann bekannte Presstechnik auf einer Composite-Presse hergestellt. Die mittels Direktimprägnierung hergestellten, homogenen Prepregs wurden an einer Tischpresse zu Verbundwerkstoffen verpresst. Bei dieser Tischpresse handelt es sich um die Polystat 200 T der Firma Schwabenthan, mit der die Prepregs bei Temperaturen zwischen 120 und 200 °C zu den entsprechenden Composite-Platten verpresst werden. Der Druck wird zwischen Normaldruck und 450 bar variiert. Dynamische Verpressungen, d. h. wechselnde Druckbeaufschlagungen können sich je nach Bauteil-Größe, Bauteil-Dicke und Polyurethanzusammensetzung und damit der Viskositätseinstellung bei der Verarbeitungstemperatur für die Benetzung der Fasern als vorteilhaft erweisen.

In einem Beispiel wird die Temperatur der Presse auf 150 °C eingestellt und im Verlauf der Verpressung auf 180 °C erhöht, der Druck wird nach einer kurzen Aufschmelzphase von 3 Minuten auf 5 bar erhöht und bis zur Entnahme des Composite-Bauteils aus der Presse nach bis zu 30 Minuten gehalten. Die harten, steifen, chemikalienbeständigen und schlagzähen Composite-Bauteile (Plattenware) werden hinsichtlich des Aushärtungsgrades (Bestimmung über DSC) untersucht. Bei der verwendeten Polyurethan-Zusammensetzung ist nach ca. 20 Minuten die Vernetzung vollständig, wobei dann auch keine Reaktionsenthalpie für die Vernetzungsreaktion mehr detektierbar ist.

## Patentansprüche

1. Verfahren zur Herstellung von Prepregs
im Wesentlichen aufgebaut aus
A) mindestens einem Faser förmigen Träger
und
B) mindestens einer reaktiven Polyurethanzusammensetzung als Matrixmaterial, wobei die Polyurethanzusammensetzungen im Wesentlichen Mischungen aus einem gegenüber Isocyanaten reaktive funktionelle Gruppen aufweisenden Polymeren b) als Binder, die Binder b) einen Festharzcharakter haben, und intern blockiertem Di- oder Polyisocyanat als Härter a) enthalten, in mindestens einem Lösemittel (C),
I. durch Herstellung der reaktiven Polyurethanzusammensetzung B) in mindestens einem Lösemittel (C),
und
II. direkte Imprägnierung des Faser förmigen Träger A) mit der Lösung aus B),
III. Entfernen des Lösemittels.

2. Verfahren zur Herstellung von Prepregs nach Anspruch 1,
wobei das Matrixmaterial einen Tg von mindestens 40 °C aufweist.

3. Verfahren Herstellung von Prepregs nach mindestens einem der vorherigen Ansprüche,
**dadurch gekennzeichnet,**
**dass** Faser förmiges Material aus Glas, Kohlenstoff, Kunststoffen, wie Polyamid oder Polyester, Naturfasern, oder mineralischen Fasermaterialien wie Basaltfasern oder keramische Fasern enthalten ist.

4. Verfahren zur Herstellung von Prepregs nach mindestens einem der vorherigen Ansprüche,
**dadurch gekennzeichnet,**
**dass** als Faser förmiger Träger textile Flächengebilde aus Vlies, Maschenware, Gewirke und Gestricke, nicht maschige Gebinde wie Gewebe, Gelege oder Geflechte, als Langfaser- und Kurzfasermaterialien, enthalten sind.

5. Verfahren zur Herstellung von Prepregs nach mindestens einem der vorherigen Ansprüche,
**dadurch gekennzeichnet,**
**dass** Verfahren bei einer Temperaturobergrenze von 120 °C, bevorzugt bei Temperaturen von 80 bis 100 °C, durchgeführt wird.

6. Verfahren zur Herstellung von Prepregs nach mindestens einem der vorherigen Ansprüche,
**dadurch gekennzeichnet,**
**dass** Polymere mit Hydroxylgruppen, Aminogruppen und Thiolgruppen, insbesondere Polyester, Polyether, Polyacrylate, Polycarbonate und Polyurethane mit einer OH-Zahl von 20 bis 500 mg KOH/Gramm und einer mittleren Molmasse von 250 bis 6000 g/Mol, eingesetzt werden.

7. Verfahren zur Herstellung von Prepregs nach mindestens einem der vorherigen Ansprüche,
**dadurch gekennzeichnet,**
**dass** Di- oder Polyisocyanate, ausgewählt aus Isophorondiisocyanat (IPDI), Hexamethylendiisocyanat (HDI), Diisocyanatodicyclohexylmethan (H₁₂MDI), 2-Methylpentandiisocyanat (MPDI), 2,2,4-Trimethylhexamethylendiisocyanat/2,4,4-Trimethylhexamethylendiisocyanat (TMDI) und/oder Norbornandiisocyanat (NBDI), besonders bevorzugt IPDI, HDI, TMDI und H₁₂MDI, wobei auch die Isocyanurate einsetzbar sind, eingesetzt werden.

8. Verfahren zur Herstellung von Prepregs nach mindestens einem der vorherigen Ansprüche,
**dadurch gekennzeichnet,**
**dass** die reaktiven Polyurethanzusammensetzungen B) zusätzliche Katalysatoren enthalten, bevorzugt Dibutylzinndilaurat, Zinkoctoat, Bismuthneodecanoat, und/oder tertiäre Amine, bevorzugt 1,4-Diazabicylco[2.2.2.]octan, in Mengen von 0,001 - 1 Gew.-%.

9. Verfahren zur Herstellung von Prepregs nach mindestens einem der vorherigen Ansprüche,
mit einem Matrixmaterial aus mindestens einer reaktiven Uretdiongruppen haltigen Polyurethanzusammensetzungen B), im Wesentlichen enthaltend
a) mindestens einen Uretdiongruppen haltigen Härter, basierend auf Polyadditionsverbindungen aus aliphatischen, (cyclo)aliphatischen oder cycloaliphatischen Uretdiongruppen enthaltende Polyisocyanaten und hydroxylgruppenhaltigen Verbindungen, wobei der Härter unterhalb von 40 °C in fester Form und oberhalb von 125 °C in flüssiger Form vorliegt, einen freien NCO-Gehalt von kleiner 5 Gew.-% und einem Uretdiongehalt von 3 - 25 Gew.-% aufweist,
b) mindestens ein hydroxylgruppenhaltiges Polymer, das unterhalb von 40 °C in fester Form und oberhalb von 125 °C in flüssiger Form vorliegt und einer OH-Zahl zwischen 20 und 200 mg KOH / Gramm,
c) gegebenenfalls mindestens einen Katalysator,
d) gegebenenfalls aus der Polyurethanchemie bekannte Hilfs- und Zusatzstoffe, so dass die beiden Komponenten a) und b) in dem Verhältnis vorliegen, dass auf jede Hydroxylgruppe der Komponente b) 0,3 bis 1 Uretdiongruppe der Komponente a) entfällt, bevorzugt 0,45 bis 0,55.

10. Verfahren zur Herstellung von Prepregs, nach mindestens einem der Ansprüche 1 bis 7, mit mindestens einer hochreaktiven pulverförmigen Uretdiongruppen haltigen Polyurethanzusammensetzung B) als Matrixmaterial, im Wesentlichen enthaltend
a) mindestens einen Uretdiongruppen haltigen Härter
und
b) optional mindestens ein Polymer mit gegenüber NCO-Gruppen reaktiven funktionellen Gruppen;
c) 0,1 bis 5 Gew.-% mindestens einen Katalysator ausgewählt aus quarternären Ammoniumsalzen und/oder quarternären Phosphoniumsalzen mit Halogenen, Hydroxiden, Alkoholaten oder organischen oder anorganischen Säureanionen als Gegenion;
und
d) 0,1 bis 5 Gew.-% mindestens einen Co-Katalysator, ausgewählt aus
d1) mindestens einem Epoxid
und/oder
d2) mindestens einem Metallacetylacetonat und/oder quarternären Ammoniumacetylacetonat und/oder quarternären Phosphoniumacetylacetonat;
e) gegebenenfalls aus der Polyurethanchemie bekannte Hilfs- und Zusatzstoffe.

11. Verfahren zur Herstellung von Prepregs nach mindestens einem der vorherigen Ansprüche 1 bis 7 oder 10 mit mindestens einer hochreaktiven pulverförmigen Uretdiongruppen haltigen Polyurethanzusammensetzung B) als Matrixmaterial, im Wesentlichen enthaltend
a) mindestens einen Uretdiongruppen haltigen Härter, basierend auf Polyadditionsverbindungen aus aliphatischen, (cyclo)aliphatischen oder cycloaliphatischen Uretdiongruppen enthaltende Polyisocyanaten und hydroxylgruppenhaltigen Verbindungen, wobei der Härter unterhalb von 40 °C in fester Form und oberhalb von 125 °C in flüssiger Form vorliegt und einen freien NCO-Gehalt von kleiner 5 Gew.-% und einem Uretdiongehalt von 3 - 25 Gew.-% aufweist,
b) mindestens ein hydroxylgruppenhaltiges Polymer, das unterhalb von 40°C in fester Form und oberhalb von 125 °C in flüssiger Form vorliegt und einer OH-Zahl zwischen 20 und 200 mg KOH / Gramm;
c) 0,1 bis 5 Gew.-% mindestens einen Katalysator ausgewählt aus quarternären Ammoniumsalzen und/oder quarternären Phosphoniumsalzen mit Halogenen, Hydroxiden, Alkoholaten oder organischen oder anorganischen Säureanionen als Gegenion;
und
d) 0,1 bis 5 Gew.-% mindestens einen Co-Katalysator, ausgewählt aus
d1) mindestens einem Epoxid
und/oder
d2) mindestens einem Metallacetylacetonat und/oder quarternären Ammoniumacetylacetonat und/oder quarternären Phosphoniumacetylacetonat;
e) gegebenenfalls aus der Polyurethanchemie bekannte Hilfs- und Zusatzstoffe,
so dass die beiden Komponenten a) und b) in dem Verhältnis vorliegen, dass auf jede Hydroxylgruppe der Komponente b) 0,3 bis 1 Uretdiongruppe der Komponente a) entfällt, bevorzugt 0,6 bis 0,9.

12. Verwendung der Prepregs hergestellt nach mindestens einem der Ansprüche 1 bis 11, zur Herstellung von Composites im Boots- und Schiffbau, in der Luft- und Raumfahrtechnik, im Automobilbau, für Zweiräder bevorzugt Motorräder und Fahrräder, in den Bereichen Automotive, Construction, Medizintechnik, Sport, Elektro- und Elektronik-Industrie, Energieerzeugungsanlagen, wie für Rotorblätter bei Windkraftanlagen.

13. Composite-Bauteile, hergestellt nach mindestens einem der Ansprüche 1 bis 13, aufgebaut aus A) mindestens einem Faser förmigen Träger und B) mindestens einer vernetzten Polyurethanzusammensetzung, bevorzugt einer vernetzten Uretdiongruppen haltigen Polyurethanzusammensetzung, als Matrix.

14. Prepregs, hergestellt nach einem Verfahren der Ansprüche 1 bis 11.

15. Prepregs, hergestellt nach einem Verfahren der Ansprüche 1 bis 11, durch Reaction Injection Moulding (RIM), Reinforced Reaction Injection Moulding (RRIM), Pultrusionsverfahren, durch Aufbringen der Lösung in einem Walzenstuhl oder mittels eines heissen Rakels.

## Claims

1. Process for the production of prepregs essentially made up of
A) at least one fibrous support
and
B) at least one reactive polyurethane composition as matrix material,
wherein the polyurethane compositions essentially contain mixtures of a polymer b) having functional groups reactive towards isocyanates as binders, the binders b) being of a solid resin nature, and internally blocked di- or polyisocyanate as curing agents a), in at least one solvent (C),
I. by production of the reactive polyurethane composition B) in at least one solvent (C),
and
II. direct impregnation of the fibrous support A) with the solution from B),
III. removal of the solvent.

2. Process for the production of prepregs according to Claim 1,
wherein the matrix material has a Tg of at least 40°C.

3. Process for the production of prepregs according to at least one of the previous claims,
**characterized in that**
fibrous material of glass, carbon, plastics such as polyamide or polyester, natural fibres or mineral fibre materials such as basalt fibres or ceramic fibres is contained.

4. Process for the production of prepregs according to at least one of the previous claims,
**characterized in that**
planar textile bodies of non-woven material, knitted goods, hosiery and knitted fabrics, non-knitted skein such as fabric, non-woven or netting, as long fibre and short fibre materials, are contained as fibrous supports.

5. Process for the production of prepregs according to at least one of the previous claims,
**characterized in that**
the process is performed with an upper temperature limit of 120°C, preferably at temperatures from 80 to 100°C.

6. Process for the production of prepregs according to at least one of the previous claims,
**characterized in that**
polymers with hydroxyl groups, amino groups and thiol groups, in particular polyesters, polyethers, polyacrylates, polycarbonates and polyurethanes with an OH number of 20 to 500 mg KOH/gram and an average molecular weight of 250 to 6000 g/mol, are used.

7. Process for the production of prepregs according to at least one of the previous claims,
**characterized in that**
di- or polyisocyanates, selected from isophorone diisocyanate (IPDI), hexamethylene diisocyanate (HDI), diisocyanatodicyclohexylmethane (H₁₂MDI), 2-methylpentane diisocyanate (MPDI), 2,2,4-trimethylhexamethylene diisocyanate/2,4,4-trimethylhexamethylene diisocyanate (TMDI) and/or norbornane diisocyanate (NBDI), particularly preferably IPDI, HDI, TMDI and H₁₂MDI, where the isocyanurates are also usable, are used.

8. Process for the production of prepregs according to at least one of the previous claims,
**characterized in that**
the reactive polyurethane compositions B) contain additional catalysts, preferably dibutyltin dilaurate, zinc octoate, bismuth neodecanoate, and/or tertiary amines, preferably 1,4-diazabicyclo[2.2.2]octane, in quantities from 0.001 - 1 wt.%.

9. Process for the production of prepregs according to at least one of the previous claims,
with a matrix material of least one reactive polyurethane composition B) containing uretdione groups, essentially containing
a) at least one curing agent containing uretdione groups, based on polyaddition compounds from aliphatic, (cyclo)aliphatic or cycloaliphatic polyisocyanates containing uretdione groups and hydroxyl group-containing compounds, wherein the curing agent exists in solid form below 40°C and in liquid form above 125°C, and has a free NCO content of less than 5 wt.% and a uretdione content of 3 - 25 wt.%,
b) at least one hydroxyl group-containing polymer, which exists in solid form below 40°C and in liquid form above 125°C and has an OH number between 20 and 200 mg KOH / gram,
c) optionally at least one catalyst,
d) optionally auxiliary substances and additives known from polyurethane chemistry, so that the two components a) and b) are present in the ratio such that for every hydroxyl group of the component b) 0.3 to 1 uretdione group of the component a) is consumed, preferably 0.45 to 0.55.

10. Process for the production of prepregs, according to at least one of Claims 1 to 7, with, as matrix material, at least one highly reactive powdery polyurethane composition B) containing uretdione groups, the matrix material essentially containing
a) at least one curing agent containing uretdione groups
and
b) optionally at least one polymer with functional groups reactive towards NCO groups;
c) 0.1 to 5 wt.% of at least one catalyst selected from quaternary ammonium salts and/or quaternary phosphonium salts with halogens, hydroxides, alcoholates or organic or inorganic acid anions as the counter-ion;
and
d) 0.1 to 5 wt.% of at least one cocatalyst, selected from
d1) at least one epoxide
and/or
d2) at least one metal acetylacetonate and/or quaternary ammonium acetylacetonate and/or quaternary phosphonium acetylacetonate;
e) optionally auxiliary substances and additives known from polyurethane chemistry.

11. Process for the production of prepregs according to at least one of the previous Claims 1 to 7 or 10 with at least one highly reactive powdery polyurethane composition B) containing uretdione groups as matrix material, essentially containing
a) at least one curing agent containing uretdione groups, based on polyaddition compounds from aliphatic, (cyclo)aliphatic or cycloaliphatic polyisocyanates containing uretdione groups and hydroxyl group-containing compounds, wherein the curing agent exists in solid form below 40°C and in liquid form above 125°C and has a free NCO content of less than 5 wt.% and a uretdione content of 3 - 25 wt.%,
b) at least one hydroxyl group-containing polymer, which exists in solid form below 40°C and in liquid form above 125°C and has an OH number between 20 and 200 mg KOH / gram;
c) 0.1 to 5 wt.% of at least one catalyst selected from quaternary ammonium salts and/or quaternary phosphonium salts with halogens, hydroxides, alcoholates or organic or inorganic acid anions as the counter-ion;
and
d) 0.1 to 5 wt.% of at least one cocatalyst, selected from
d1) at least one epoxide
and/or
d2) at least one metal acetylacetonate and/or quaternary ammonium acetylacetonate and/or quaternary phosphonium acetylacetonate;
e) optionally auxiliary substances and additives known from polyurethane chemistry,
so that the two components a) and b) are present in the ratio such that for every hydroxyl group of the component b) 0.3 to 1 uretdione group of the component a) is consumed, preferably 0.6 to 0.9.

12. Use of the prepregs produced according to at least one of Claims 1 to 11,
for the production of composites in boat and shipbuilding, in aerospace technology, in automobile manufacture, and for bicycles preferably motorcycles and cycles, and in the sectors automotive, construction, medical engineering, sport, electrical and electronics industry, and power generating plants, such as for rotor blades in wind power plants.

13. Composite components, produced according to at least one of Claims 1 to 13, made up of A) at least one fibrous support and B) at least one crosslinked polyurethane composition, preferably a crosslinked polyurethane composition containing uretdione groups, as matrix.

14. Prepregs, produced according to a process of Claims 1 to 11.

15. Prepregs, produced according to a process of Claims 1 to 11, by reaction injection moulding (RIM), reinforced reaction injection moulding (RRIM), pultrusion processes, by application of the solution in a cylinder mill or by means of a hot doctor knife.

## Revendications

1. Procédé pour la préparation de préimprégnés essentiellement construits à partir
A) d'au moins un support fibreux
et
B) d'au moins une composition réactive de polyuréthane en tant que matériau de matrice, les compositions de polyuréthane contenant essentiellement des mélanges d'un polymère b) présentant des groupes fonctionnels réactifs envers des isocyanates en tant que liant, les liants b) possédant un caractère de résine solide, et d'un diisocyanate ou un polyisocyanate bloqué à l'intérieur en tant que durcisseur a), dans au moins un solvant (C),
I. par préparation de la composition réactive de polyuréthane B) dans au moins un solvant (C),
et
II. imprégnation directe du support fibreux A) avec la solution de B),
III. élimination du solvant.

2. Procédé pour la préparation de préimprégnés selon la revendication 1, le matériau de matrice présentant une Tv d'au moins 40 °C.

3. Procédé pour la préparation de préimprégnés selon au moins l'une des revendications précédentes, **caractérisé en ce que** le matériau fibreux est contenu en tant que verre, carbone, plastiques, comme un polyamide ou un polyester, fibres naturelles, ou matériaux fibreux minéraux comme des fibres de basalte ou des fibres céramiques.

4. Procédé pour la préparation de préimprégnés selon au moins l'une des revendications précédentes, **caractérisé en ce qu'**en tant que support fibreux, sont contenues des structures textiles plates en non-tissés, tissus à mailles, étoffes, tricots, assemblages sans mailles tels que des tissus, des nappes ou des treillis, sous la forme de matériaux à fibres longues ou à fibres courtes..

5. Procédé pour la préparation de préimprégnés selon au moins l'une des revendications précédentes, **caractérisé en ce que** le procédé est mis en œuvre à une limite supérieure de température de 120 °C, préférablement à des températures de 80 à 100 °C.

6. Procédé pour la préparation de préimprégnés selon au moins l'une des revendications précédentes, **caractérisé en ce qu'**on utilise des polymères dotés de groupes hydroxyle, de groupes amino et de groupes thiol, en particulier des polyesters, des polyéthers, des polyacrylates, des polycarbonates et des polyuréthanes dotés d'un indice d'OH de 20 à 500 mg de KOH/gramme et d'une masse molaire moyenne de 250 à 6 000 g/mole.

7. Procédé pour la préparation de préimprégnés selon au moins l'une des revendications précédentes, **caractérisé en ce qu'**on utilise des diisocyanates ou des polyisocyanates choisis parmi le diisocyanate d'isophorone (IPDI), le diisocyanate d'hexamethylène (HDI), le diisocyanatodicyclohexylméthane (H₁₂MDI), le diisocyanate de 2-méthylpentane (MPDI), le diisocyanate de 2,2,4-triméthylhexamethylène/diisocyanate de 2,4,4-triméthylhexamethylène (TMDI) et/ou le diisocyanate de norbornane (NBDI), particulièrement préférablement l'IPDI, le HDI, le TMDI et le H₁₂MDI, les isocyanurates étant également utilisables.

8. Procédé pour la préparation de préimprégnés selon au moins l'une des revendications précédentes, **caractérisé en ce que** les compositions réactives de polyuréthane B) contiennent des catalyseurs supplémentaires, préférablement du dilaurate de dibutylétain, de l'octoate de zinc, du néodécanoate de bismuth, et/ou des amines tertiaires, préférablement du 1,4-diazabicyclo[2.2.2]octane, en des quantités de 0,001 à 1 % en poids.

9. Procédé pour la préparation de préimprégnés selon au moins l'une des revendications précédentes, comportant un matériau de matrice composé d'au moins une composition B) de polyuréthane contenant des groupes réactifs uretdione, contenant essentiellement
a) au moins un durcisseur contenant des groupes uretdione, à base de composés de polyaddition de polyisocyanates contenant des groupes uretdione aliphatiques, (cyclo)aliphatiques ou cycloaliphatiques et de composés contenant des groupes hydroxyle, le durcisseur étant présent sous forme solide au-dessous de 40 °C et sous forme liquide au-dessus de 125 °C, présentant une teneur en NCO libre inférieure à 5 % en poids et une teneur en uretdione de 3 à 25 % en poids,
b) au moins un polymère contenant des groupes hydroxyle, qui est présent sous forme solide au-dessous de 40 °C et sous forme liquide au-dessus de 125 °C et d'un indice d'OH compris entre 20 et 200 mg de KOH/gramme,
c) éventuellement au moins un catalyseur,
d) éventuellement des auxiliaires et des additifs connus dans la chimie des polyuréthanes, de sorte que les deux composants a) et b) sont présents en un rapport tel qu'à chaque groupe hydroxyle du composant b) correspond 0,3 à 1 groupe uretdione du composant a), préférablement 0,45 à 0,55.

10. Procédé pour la préparation de préimprégnés, selon au moins l'une des revendications précédentes 1 à 7, avec au moins une composition B) en poudre hautement réactive de polyuréthane contenant des groupes uretdione en tant que matériau de matrice, contenant essentiellement
a) au moins un durcisseur contenant des groupes uretdione
et
b) éventuellement au moins un polymère doté de groupes fonctionnels réactifs envers des groupes NCO ;
c) 0,1 à 5 % en poids d'au moins un catalyseur choisi parmi des sels d'ammonium quaternaire et/ou des sels de phosphonium quaternaire avec des halogènes, des hydroxydes, des alcoolates ou des anions d'acides organiques ou inorganiques en tant que contre-ion ;
et
d) 0,1 à 5 % en poids d'au moins un co-catalyseur, choisi parmi
d1) au moins un époxyde
et/ou
d2) au moins un acétylacétonate de métal et/ou un acétylacétonate d'ammonium quaternaire et/ou un acétylacétonate de phosphonium quaternaire ;
e) éventuellement des auxiliaires et des additifs connus dans la chimie des polyuréthanes.

11. Procédé pour la préparation de préimprégnés, selon au moins l'une des revendications précédentes 1 à 7 ou 10 avec au moins une composition B) en poudre hautement réactive de polyuréthane contenant des groupes uretdione en tant que matériau de matrice, contenant essentiellement
a) au moins un durcisseur contenant des groupes uretdione, à base de composés de polyaddition de polyisocyanates contenant des groupes uretdione aliphatiques, (cyclo)aliphatiques ou cycloaliphatiques et de composés contenant des groupes hydroxyle, le durcisseur étant présent sous forme solide au-dessous de 40 °C et sous forme liquide au-dessus de 125 °C et présentant une teneur en NCO libre inférieure à 5 % en poids et une teneur en uretdione de 3 à 25 % en poids,
b) au moins un polymère contenant des groupes hydroxyle, qui est présent sous forme solide au-dessous de 40 °C et sous forme liquide au-dessus de 125 °C et d'un indice d'OH compris entre 20 et 200 mg de KOH/gramme ;
c) 0,1 à 5 % en poids d'au moins un catalyseur choisi parmi des sels d'ammonium quaternaire et/ou des sels de phosphonium quaternaire avec des halogènes, des hydroxydes, des alcoolates ou des anions d'acides organiques ou inorganiques en tant que contre-ion ;
et
d) 0,1 à 5 % en poids d'au moins un co-catalyseur, choisi parmi
d1) au moins un époxyde
et/ou
d2) au moins un acétylacétonate de métal et/ou un acétylacétonate d'ammonium quaternaire et/ou un acétylacétonate de phosphonium quaternaire ;
e) éventuellement des auxiliaires et des additifs connus dans la chimie des polyuréthanes,
de sorte que les deux composants a) et b) sont présents en un rapport tel qu'à chaque groupe hydroxyle du composant b) correspond 0,3 à 1 groupe uretdione du composant a), préférablement 0,6 à 0,9.

12. Utilisation de préimprégnés préparés selon au moins l'une des revendications 1 à 11, pour la préparation de composites dans la construction d'embarcations et la construction navale, dans la technologie aérospatiale, dans la construction automobile, pour des véhicules à deux roues, préférablement des motocycles et des bicyclettes, dans les domaines de l'industrie automobile, de la construction, de la technologie médicale, du sport, de l'industrie électrique et électronique, des installations de production d'énergie, telles que des pales de rotor d'éoliennes.

13. Composants composites, préparés selon au moins l'une des revendications 1 à 13, construits à partir de A) au moins un support fibreux et B) au moins une composition de polyuréthane réticulée, préférablement une composition de polyuréthane réticulée contenant des groupes uretdione, en tant que matrice.

14. Préimprégnés, préparés par un procédé selon les revendications 1 à 11.

15. Préimprégnés, préparés par un procédé selon les revendications 1 à 11, par moulage par injection et réaction (RIM), par moulage par injection et réaction renforcé (RRIM), par un procédé de pultrusion, par dépôt de la solution dans un moulin à cylindre ou au moyen d'un racloir chaud.
